# FASCICULE DE BREVET EUROPEEN

(11) **EP 1 059 035 B1**
(45) Date de publication et mention de la délivrance du brevet: **21.01.2004**
(21) Numéro de dépôt: 00450009.6
(22) Date de dépôt: 08.06.2000
(51) Int. Cl.: A21D 6/00, C08B 30/02, A23L 1/10, A23L 1/0522

(54) **Procédé de fabrication d'un substituant a l'amidon, notamment à partir de mais et le substituant obtenu**
Verfahren zur Herstellung von einem Stärkeersatz auf der Basis von Mais und so hergestellter Ersatz
Process for obtaining a starch substitute from maize and the substitute so obtained

(30) Priorité: 09.06.1999 FR 9907506
(43) Date de publication de la demande: 13.12.2000
(73) Titulaire: Lacadee, Jean-Bernard, 64140 Billere (FR)
(72) Inventeur: Lacadee, Jean-Bernard, 64140 Billere (FR)
(74) Mandataire: Thébault, Jean-Louis

(56) Documents cités:
- EP-A- 0 449 697
- EP-A- 0 459 551
- AU-B- 413 774
- DE-A- 4 344 139
- US-A- 3 928 647
- H. ZWINGELBERG: "Prallzerkleinerung und Windsichtung integriert in ein Vermahlungssystem" GETREIDE MEHL UND BROT, vol. 52, no. 1, 1998, pages 18-23, XP000874024 de

## Description

La présente invention concerne un procédé de fabrication d'un substituant de l'amidon, notamment à partir de maïs ainsi que le substituant obtenu par ce procédé.

On connaît un produit couramment utilisé dans l'industrie qu'il s'agisse des secteurs alimentaire, pharmaceutique ou encore cosmétique, du papier, des colles, du bâtiment, c'est l'amidon.

L'amidon est utilisé pour ses propriétés épaississantes et pour d'autres propriétés particulières moyennant des traitements complémentaires. La fabrication de ces produits occupe des secteurs particuliers de l'industrie.

Néanmoins, bien que très utilisé dans de nombreux domaines, il apparaît que l'amidon de grande pureté est difficile à produire et demande des installations complexes qui génèrent des quantités très importantes de sous-produits et d'effluents de traitement comme les eaux de process.

En effet, pour obtenir de l'amidon, il faut effectuer, de façon générale, la succession des étapes suivantes :
- trempage des grains de céréales en présence d'une solution acide ou basique,
- séparation des germes après passage dans un broyeur grossier,
- broyage fin en voie humide pour libérer l'amidon,
- séparation des sons,
- séparation des protéines,
- centrifugation pour retirer la majorité de l'eau, et
- séchage de ce lait pour obtenir la poudre d'amidon.

L'amidon obtenu présente une granulométrie comprise entre 15 et 25*µ*m pour les granules d'amidon de maïs. Il est utilisé comme adjuvant dans divers domaines pour assurer les fonctions épaississant, gélifiant et liant des produits aqueux ainsi que l'amélioration de l'état de surface de certains produits finis, qu'il s'agisse du secteur agro-alimentaire, de l'industrie papetière, de la fabrication d'adhésif ou d'enduits pour le bâtiment ou encore des secteurs des textiles et de la pharmacie.

Par ailleurs, on connaît les farines qui sont des produits issus de la mouture des amandes des grains de céréales, y compris de maïs. Les farines ont une granulométrie moyenne comprise entre 180 et 350*µ*m.

Ces farines sont utilisées comme des ingrédients dans la fabrication de produits alimentaires mais elles ne sont actuellement pas utilisées comme adjuvants au même titre que l'amidon car elles ne conduisent pas aux mêmes caractéristiques rhéologiques des milieux auxquels elles sont mélangées.

De plus, il se pose le problème de la qualité des farines car elles résultent souvent de la chaîne de traitement des amandes des grains de céréales. Or ces fabrications permettent essentiellement d'obtenir de la semoule à haute valeur ajoutée, dont la teneur en germe et donc en graisses est faible, notamment en ce qui concerne le maïs. Cette semoule est grossièrement concassée et classifiée suivant les différentes granulométries. La semoule ainsi obtenue sous ses différentes fractions est le produit à haute valeur ajoutée. Au contraire, la farine est issue des différents broyages des amandes et d'un broyage final des brisures concassées trop finement pour être considérées comme de la semoule et cette farine est dans ce cas un sous produit. Dans certaines farines complètes, on incorpore les broyats d'enveloppe.

La présence de matière grasse notamment, conduit à l'obtention de farines ayant généralement une relativement forte teneur en matière grasse, qui peuvent être commercialisées comme ingrédients dans l'agro-alimentaire mais qui les rend impropres à des applications comme adjuvants au même titre que l'amidon.

La présente invention vise à proposer une farine micronisée qui permet une utilisation en tant que substituant de l'amidon pour de nombreuses applications, qui évite de générer des effluents inhérents à la voie humide et donc qui supprime la nécessité de traiter ces effluents, qui présente une grande facilité de dispersion en milieu aqueux et qui limite les consommations énergétiques coûteuses engendrées notamment par les phases de décantation et de séchage.

A cet effet, selon le procédé de l'invention permettant la fabrication d'un substituant de l'amidon, il faut réaliser la succession des étapes suivantes:
- préparation par voie sèche d'une farine de céréales avec une granulométrie comprise entre 180 et 350*µ*m,
- diminution de la granulométrie moyenne de cette farine pour la microniser à des valeurs moyennes comprises entre 16 et 130*µ*m, en limitant l'endommagement des chaînes d'amidon, et
- tri des différentes fractions.

La granulométrie obtenue est comprise entre 0,1 *µ*m et 430 *µ*m avec une moyenne à 80 *µ*m et de préférence la granulométrie obtenue classée en trois fractions est la suivante :
- moyenne centrée sur 16 *µ*m avec 80% compris entre 2 et 23 *µ*m,
- moyenne centrée sur 80 *µ*m avec 80% compris entre 24 et 200 *µ*m,
- moyenne centrée sur 130 *µ*m avec 80% compris entre 10 et 250 *µ*m.

Cette diminution de la granulométrie est réalisée préférentiellement au moyen d'un broyeur à impact ou d'un broyeur à broches.

La farine micronisée est issue des amandes, les germes ayant été retirés.

On peut également additionner des fibres micronisées provenant des enveloppes de grains.

La présente invention a aussi pour objet le substituant à l'amidon obtenu qui comprend des chaînes d'amidon intègre avec un faible taux d'amidon endommagé, le restant étant des protéines.

La présente invention est maintenant décrite en détail suivant un mode de mise en oeuvre particulier, non limitatif, avec des résultats comparatifs d'essais faisant ressortir les propriétés particulières de la farine micronisée selon la présente invention.

Le procédé selon la présente invention consiste à préparer de la farine micronisée à partir des amandes de céréales et pour simplifier la description, on choisit une application au maïs, quelle que soit sa nature, qu'il soit génétiquement modifié ou non.

Une première étape consiste à obtenir les différents produits de base et une seconde étape vise à atteindre le résultat souhaité, à savoir de la farine micronisée selon l'enseignement de la présente demande.

Un exemple d'obtention des produits de base consiste à faire subir aux grains de maïs une humidification et ces grains humides passent dans un éclateur qui éclatent chacun des grains pour permettre l'obtention de brisures de l'amande avec différentes granulométries, le détachement des germes et la séparation de l'enveloppe fibreuse.

Un passage à travers un séparateur connu sous le nom de plansichter, permet de séparer les germes, les enveloppes et d'assurer un premier tri des brisures en plusieurs fractions.

Ces différentes fractions de brisures sont à nouveau broyées pour diminuer la granulométrie suivant les résultats obtenus en sortie du plansichter, les fractions sont regroupées si besoin est pour obtenir in fine une farine quasi-exempte de germes et de fibres.

Cette farine n'est donc pas un rebut mais un broyat fin des amandes et la granulométrie est de 200*µ*m.

La présente invention consiste à microniser cette farine pour atteindre une granulométrie de l'ordre de 20 à 130*µ*m avec une moyenne située à 80*µ*m.

On sépare ensuite les fractions obtenues par classement, préférentiellement suivant la densité. Les fractions obtenues présentent aussi un rapport avec la granulométrie, ce qui conduit par exemple à la répartition suivante :
- fines à 16*µ*m, 7 à 24%
- médium à 70*µ*m, 50 à 65%, et
- grosses à 130*µ*m, 8 à 33%.

Un dispositif de tri adapté consiste à recourir à des moyens de centrifugation, notamment pneumatiques sous dépression, comme celui décrit dans la demande de brevet EP N°418 801.

Il convient de procéder à cette micronisation au moyen d'un dispositif qui évite d'endommager l'amidon comme cela sera expliqué ultérieurement et un dispositif adapté est un broyeur fin à impact. Un tel broyeur comprend des moyens pour projeter les grains de farine contre une paroi avec une vitesse donnée, un angle donné et un état de surface de paroi donné. Ces paramètres relèvent du modèle de broyeur et donc des spécificités du constructeur, l'homme de l'art étant à même de régler de tels broyeurs.

On peut aussi recourir à un broyeur à broches qui permet aussi d'atteindre un tel résultat même si le broyeur précédent reste utilisé dans le mode préférentiel.

Les différentes fractions sont à nouveau classées en fines, médium et grosses pour permettre, soit de les utiliser directement en se limitant à une fraction choisie soit de réaliser des appariements dosés pour obtenir une composition avec une échelle granulométrique adaptée à l'application.

De façon surprenante, on constate que cette farine présente des caractéristiques sensiblement identiques à celles de l'amidon natif qui aurait pu en être extrait par voie humide, lorsque l'on substitue cette farine à l'amidon dans un grand nombre des applications connues.

Il est donc possible de substituer à l'amidon natif la farine micronisée de l'amande sans que cela perturbe les applications.

L'analyse de cette farine micronisée montre qu'elle contient des chaînes d'amidon dites intègres c'est à dire que les chaînes comportent l'ensemble des groupes "glucose" nécessaires sans que certains d'entre eux aient été séparés sous les effets des impacts mécaniques. Cette présence d'amidon intègre permet d'expliquer au moins partiellement les possibilités de substitution de la farine micronisée en lieu et place de l'amidon.

De ce fait la farine micronisée obtenue présente des caractéristiques d'épaississant, de gélifiant et de liant et permet d'améliorer l'état de surface des produits finis obtenus.

Cette farine micronisée peut comprendre également une quantité variable d'amidon endommagé qui permet de faire varier son pouvoir de rétention d'eau. La proportion entre les deux types d'amidon détermine les caractéristiques de la farine micronisée.

Cette farine contient aussi des protéines qui ne sont pas séparées du milieu. En effet, la présente invention ne vise aucunement à séparer les protéines pour fabriquer des farines plus ou moins enrichies en protéines.

On a également observé que cette farine micronisée peut recevoir un ajout de fibres pour certaines applications.

Dans ce but, il faut prévoir une co-micronisation d'une partie des fibres avec les amandes mais de façon préférentielle, il est prévu une micronisation des fibres provenant des enveloppes par une étape à part de celle du broyage des amandes.

En effet, même si les dispositifs utilisés sont identiques à ceux mis en oeuvre pour les amandes, les étapes peuvent être différentes et la sélection des fractions aussi. De ce fait, la micronisation est préférentiellement réalisée indépendamment de l'élaboration de la farine micronisée.

Ces fibres sont micronisées suivant différentes fractions également, et peuvent être ainsi mélangées en quantité donnée et suivant la répartition granulométrique souhaitée avec la farine micronisée.

On remarque les grandes qualités des produits obtenus à savoir des produits naturels et écologiques, indépendamment de l'aspect économique qui est très intéressant du fait même du procédé.

En effet, le procédé est purement mécanique et ne nécessite aucune adjonction de produits chimiques pour son obtention.

De plus, le produit est fabriqué par voie sèche et ne génère donc aucun rejet d'effluent liquide de traitement.

De plus, on peut appliquer ce procédé à toute céréale autre que le maïs, blé, riz, orge, avoine, millet ou épeautre, moyennant une adaptation des différents paramètres.

La farine micronisée obtenue par le procédé selon la présente invention, en plus d'être un substitut de l'amidon, est une base pour des traitements complémentaires ultérieurs pour obtenir des produits élaborés comme l'amidon modifié, la malto-dextrine, le sirop de glucose, le dextrose et l'alcool.

Des essais ont été menés simplement dans le cadre d'une faisabilité et sont indiqués ci-après :

### ETUDE EN AGRO-ALIMENTAIRE

- La fabrication de biscuits à la cuillère a été entreprise en remplaçant l'amidon par une quantité identique de farine micronisée obtenue par le procédé selon la présente invention, à savoir 4,5%. L'incorporation de tels éléments permet d'améliorer le liant et la capacité de rétention d'eau dans le temps, c'est à dire l'aspect et la longévité du biscuit.

Le biscuit obtenu avec la farine micronisée présente la même homogénéité dans la texture et le même type d'alvéoles, en dimensions comme en répartition.

Le "moelleux" du biscuit est identique et la longévité reste inchangée.

Du point de vue gustatif, le biscuit est exempt de goût particulier.
- La fabrication de soupe en poudre poireau/pomme de terre a été réalisée en substituant à l'amidon utilisé à raison de 12% , une quantité identique de farine micronisée obtenue selon le procédé de la présente invention.

La soupe obtenue à partir de cette poudre présente la même viscosité et le même épaississement.

On ne note pas de changement de goût.

### ETUDE EN PAPETERIE

Trois types de produits de base ont été préparés :
- amidon témoin concentré à 10%,
- farine micronisée selon le présent procédé, concentrée à 10%, et
- farine micronisée selon le présent procédé, concentrée à 15%.

Les concentrations sont contrôlées au réfractomètre.

On a aussi mesuré les paramètres suivants :
- viscosité Brookfield mesurée à 100 tours/mn à t° de 70°C, et
- pH.

On note simplement une plus faible viscosité de la farine pour une même concentration, 40 pour l'amidon et 30 pour la farine mais dès 15% de concentration de farine, la viscosité est identique.

Des essais de dépôts ont été conduits sur des supports en feuille de grammage 150 g/cm², à une température de 40°C, en size press de laboratoire et on obtient des dépôts identiques pour les mêmes concentrations à savoir 2,9 et 3,1 g/m².

A concentration plus élevée de 15% de farine micronisée, on obtient la valeur de 4,4 g/m².

En ce qui concerne les essais de résistance mécanique de ces échantillons après passage au séchoir dans des conditions normalisées, on constate une résistance mécanique dite à l'éclatement qui est légèrement inférieure pour les papiers couchés ayant été traités avec la farine micronisée tandis que la résistance à la compression à plat ou sur chant est sensiblement identique à celle du papier témoin.

Ces premiers résultats montrent que la substitution de l'amidon par de la farine micronisée obtenue par le procédé selon la présente invention permet d'atteindre des résultats très satisfaisants.

## Revendications

1. Procédé de fabrication d'un substituant de l'amidon, **caractérisé par** la succession des étapes suivantes :
- préparation par voie sèche d'une farine de céréales avec une granulométrie comprise entre 180 et 350*µ*m,
- diminution de la granulométrie moyenne de cette farine pour la microniser à des valeurs moyennes comprises entre 16 et 130*µ*m, en limitant l'endommagement des chaînes d'amidon, et
- tri des différentes fractions.

2. Procédé selon la revendication 1, **caractérisé en ce que** la granulométrie obtenue est comprise entre 0,1 µm et 430 *µ*m avec une moyenne à 80 *µ*m.

3. Procédé selon la revendication 2, **caractérisé en ce que** la granulométrie obtenue est la suivante :
- moyenne centrée sur 16 *µ*m avec 80% compris entre 2 et 23 *µ*m,
- moyenne centrée sur 80 *µ*m avec 80% compris entre 24 et 200 *µ*m,
- moyenne centrée sur 130 *µ*m avec 80% compris entre 10 et 250 *µ*m.

4. Procédé selon l'une quelconque des revendications 1 à 3, **caractérisé en ce que** la diminution de la granulométrie est réalisée au moyen d'un broyeur à impact afin de ne pas endommager les chaînes d'amidon.

5. Procédé selon l'une quelconque des revendications 1 à 3, **caractérisé en ce que** la diminution de la granulométrie est réalisée au moyen d'un broyeur à broches afin de ne pas endommager les chaînes d'amidon.

6. Procédé selon l'une quelconque des revendications précédentes, **caractérisé en ce que** la farine est issue des amandes en excluant les germes des grains de céréale.

7. Procédé selon l'une quelconque des revendications précédentes, **caractérisé en ce que** l'on ajoute à la farine micronisée un pourcentage de fibres micronisées provenant des enveloppes de grains.

8. Procédé selon la revendication 7, **caractérisé en ce que** les fibres sont micronisées séparément des amandes et sont ajoutées postérieurement à la micronisation de la farine.

9. Procédé selon l'une quelconque des revendications précédentes, **caractérisé en ce que** les fractions de farine micronisées sont séparées par des moyens de centrifugation sous vide pour limiter également l'endommagement des chaînes d'amidon.

10. Substituant de l'amidon obtenu par la mise en oeuvre de l'une quelconque des revendications 1 à 9, **caractérisé en ce que** la farine micronisée a une granulométrie comprise entre 0,1 et 430 *µ*m avec une moyenne de 80 *µ*m.

11. Substituant de l'amidon selon la revendication 10, **caractérisé en ce qu'**il comprend essentiellement des chaînes d'amidon intègre avec un faible taux d'amidon endommagé, le reste étant des protéines.

## Claims

1. A method of manufacturing a starch substitute, **characterised by** the succession of following steps:
- preparation by dry method of a cereal flour with a granularity of between 180 and 350 *µ*m,
- reduction of the mean granularity of this flour in order to reduce it to average values of between 16 and 130 *µ*m, whilst limiting the damage to the starch chains, and
- sorting of the various fractions.

2. A method according to claim 1, **characterised in that** the granularity obtained is between 0.1 *µ*m and 430 *µ*m with an average at 80 *µ*m.

3. A method according to claim 2, **characterised in that** the granularity obtained is as follows:
- average centred on 16 *µ*m with 80% between 2 and 23 *µ*m,
- average centred on 80 *µ*m with 80% between 24 and 200 *µ*m,
- average centred on 130 *µ*m with 80% between 10 and 250 *µ*m.

4. A method according to any one of claims 1 to 3, **characterised in that** the reduction in the granularity is achieved by means of an impact grinder so as not to damage the starch chains.

5. A method according to any one of claims 1 to 3, **characterised in that** the reduction in the granularity is achieved by means of a toothed roll crusher so as not to damage the starch chains.

6. A method according to any one of the preceding claims, **characterised in that** the flour comes from almonds, excluding cereal grain germs.

7. A method according to any one of the preceding claims, **characterised in that** a proportion of reduced fibres coming from grain husks is added to the reduced flour.

8. A method according to claim 7, **characterised in that** the fibres are reduced separately from the almonds and are added subsequently to the reduction of the flour.

9. A method according to any one of the preceding claims, **characterised in that** the fractions of reduced flour are separated by centrifuge means under vacuum in order also to limit the damage to the starch chains.

10. A starch substitute obtained by implementing any one of claims 1 to 9, **characterised in that** the reduced flour has a granularity of between 0.1 and 430 *µ*m with an average of 80 *µ*m.

11. A starch substitute according to claim 10, **characterised in that** it comprises substantially whole starch chains with a small amount of damaged starch, the rest being proteins.

## Patentansprüche

1. Verfahren für die Herstellung eines Stärkesubstituenten, **gekennzeichnet durch** die Folge der folgenden Schritte:
- Vorbereiten eines Getreidemehls mit Korngrößen im Bereich von 180 bis 350 µm im Trockenverfahren,
- Verringern der mittleren Korngröße dieses Mehls, um es auf mittleren Werte im Bereich von 16 bis 130 µm zu mikronisieren, wobei die Beschädigung der Stärkeketten begrenzt wird, und
- Sortieren der verschiedenen Fraktionen.

2. Verfahren nach Anspruch 1, **dadurch gekennzeichnet, dass** die erhaltenen Korngrößen im Bereich von 0,1 µm bis 430 µm liegen und einen Mittelwert von 80 µm haben.

3. Verfahren nach Anspruch 2, **dadurch gekennzeichnet, dass** die erhaltenen Korngrößen die folgenden sind:
- Mittelwert, der auf 16 µm zentriert ist, wobei 80 % im Bereich von 2 bis 23 µm liegen,
- Mittelwert, der auf 80 µm zentriert ist, wobei 80 % im Bereich von 24 bis 200 µm liegen,
- Mittelwert, der auf 130 µm zentriert ist, wobei 80 % im Bereich von 10 bis 250 µm liegen.

4. Verfahren nach einem der Ansprüche 1 bis 3, **dadurch gekennzeichnet, dass** die Verringerung der Korngröße mittels einer Prallmühle erfolgt, um die Stärkeketten nicht zu beschädigen.

5. Verfahren nach einem der Ansprüche 1 bis 3, **dadurch gekennzeichnet, dass** die Verringerung der Korngröße mittels eines Stachelwalzenbrechers erfolgt, um die Stärkeketten nicht zu beschädigen.

6. Verfahren nach einem der vorhergehenden Ansprüche, **dadurch gekennzeichnet, dass** das Mehl aus Samen stammt, wobei die Keime der Getreidekörner ausgeschlossen werden.

7. Verfahren nach einem der vorhergehenden Ansprüche, **dadurch gekennzeichnet, dass** zu dem mikronisierten Mehl ein Anteil mikronisierter Fasern hinzugefügt wird, die aus Kornschalen stammen.

8. Verfahren nach Anspruch 7, **dadurch gekennzeichnet, dass** die Fasern getrennt von den Samen mikronisiert und anschließend zu dem mikronisierten Mehl hinzugefügt werden.

9. Verfahren nach einem der vorhergehenden Ansprüche, **dadurch gekennzeichnet, dass** die mikronisierten Fraktionen des Mehls durch Zentrifugenmittel unter Vakuum getrennt werden, um ebenfalls die Beschädigung der Stärkeketten zu beschränken.

10. Stärkesubstituent, der durch Ausführen des Verfahrens nach einem der Ansprüche 1 bis 9 erhalten wird, **dadurch gekennzeichnet, dass** das mikronisierte Mehl eine Korngröße im Bereich von 0,1 bis 430 µm und einen Mittelwert von 80 µm hat.

11. Stärkesubstituent nach Anspruch 10, **dadurch gekennzeichnet, dass** er im Wesentlichen integrate Stärkeketten aufweist und einen geringen Anteil beschädigter Stärke besitzt, wobei der Rest Proteine sind.
